# EUROPEAN PATENT APPLICATION

(11) **EP 2 023 644 A1**
(43) Date of publication of application: **11.02.2009**
(21) Application number: 07720896.5
(22) Date of filing: 23.04.2007
(51) Int. Cl.: H04N 13/00

(54) **A PORTABLE PERSONAL INTEGRATIVE STEREOSCOPIC VIDEO MULTIMEDIA DEVICE**

(30) Priority: 26.04.2006 CN 200620058238 U; 08.01.2007 CN 200720047191 U
(71) Applicant: Hu, Chao, Guangzhou Guangdong 510095 (CN)
(72) Inventor: Hu, Chao, Guangzhou Guangdong 510095 (CN)
(74) Representative: Stuttard, Garry Philip
(86) International application number: PCT/CN2007/001323
(87) International publication number: WO 2007/131414

(57) **Abstract**

A portable personal integrative stereoscopic video multimedia device includes a body. A naked eye stereoscopic image liquid crystal display is disposed on the body, a control device and a battery power are disposed in the body, and a signal input interface and loudspeakers are disposed on the body. The naked eye stereoscopic image liquid crystal display, the battery power, the signal input interface, and the loudspeakers are respectively connected to a control device circuit. The invention has advantages of simple structure and vivid stereoscopic effect, and is convenient for personal entertainment and business use as images may be stored and viewed immediately after being shot.

## Description

### BACKGROUND OF THE INVENTION

### Field of Invention

The present invention relates to a multi-functional personal electronic device, and more particularly to a portable personal integrative stereoscopic video multimedia device for personal use.

### Related Art

When viewing an object, two eyes of a human have a stereoscopic sense, because a distance between two pupils of the human eyes is approximately 6-7 cm. When the two eyes view an object, the viewing angles of the two eyes are not completely the same. Although the difference between the two eyes is slight, when it is transmitted to the brain through retinas, the brain has a sense of different distances based on the slight difference, thereby generating the stereoscopic sense. One eye can also see the object, but it is difficult to differentiate the farness and nearness and the distance of the object. According to this principle, for the same image, if two pictures with a slight angle difference are produced or shot by using the viewing angle difference of the two eyes, and then the two human eyes are made to respectively view the two pictures, the brain generates a stereo image through the retinas. Currently, the principle is applied to various stereo image demonstration techniques. However, the conventional stereo image viewing devices have some disadvantages, for example, the technique is complicated, the cost is high, the image viewing effect is not ideal, so it is difficult to popularize and use the stereo image viewing device as a personal product.

As the electronic technology is developed, a multi-functional electronic product with communication, shooting, recording, displaying, and gaming functions is proposed, for example, a newly proposed portable game console Gizmondo Widescreen having a mobile phone function, which is a revolution to the conventional electronic product. However, most of the electronic video products can display only plane images, and few personal electronic devices through which the eyes may view high-quality stereoscopic images are available. According to a naked eye stereoscopic image liquid crystal display (LCD) proposed by SHARP in 2004, the inventor of the application designs a new personal stereoscopic video multimedia electronic device.

### SUMMARY OF THE INVENTION

The present invention is directed to a portable personal integrative stereoscopic video multimedia device, which has a simple structure, a low cost, and a vivid stereoscopic effect, is suitable for personal use, and enables a user to store and view images immediately after the images are shot.

The present invention provides a portable personal integrative stereoscopic video multimedia device, which includes a body. A naked eye stereoscopic image liquid crystal display (LCD) is disposed on the body, a control device and a battery power are disposed in the body, and a signal input interface and loudspeakers are disposed on the body. The naked eye stereoscopic image LCD, the battery power, the signal input interface, and the loudspeakers are respectively connected to a control device circuit.

In the portable personal integrative stereoscopic video multimedia device, two digital camera modules and sound pickups are disposed on the body, a distance between the two digital camera modules is adapted to a distance between pupils of eyes, a shooting control button and a signal output interface are disposed on the body, and a built-in memory is disposed in the body; the two digital camera modules, the signal output interface, and the built-in memory are respectively connected to the control device circuit.

In the portable personal integrative stereoscopic video multimedia device, a stereoscopic mobile TV signal receiving unit capable of synchronously receiving audio signals and two sets of video signals is disposed in the body, the signal receiving unit is connected to the control device circuit, and the control device processes and delivers the audio signals to the loudspeakers, and processes and displays the two sets of video signals on the LCD.

In the portable personal integrative stereoscopic video multimedia device, a game unit with wireless data transmission is disposed in the body, the game unit is connected to the control device circuit, and game operation buttons are disposed on the body.

In the portable personal integrative stereoscopic video multimedia device, a wireless mobile communication unit with a radio receiving function is disposed in the body, communication keys are disposed on the body, and the communication unit is connected to the control device circuit.

In the portable personal integrative stereoscopic video multimedia device, a flash unit or an illuminating light is disposed on a lateral side of the body having the two digital camera modules for light compensation during shooting.

In the portable personal integrative stereoscopic video multimedia device, a memory expansion slot is disposed on the body for using an external memory conveniently.

In the present invention, after the structure is used, the stereoscopic images displayed in the displays may be viewed through the naked eyes. Therefore, the structure is simple, and the viewed display images have a vivid stereoscopic effect. After further modification, the present invention may be used for shooting, storing, and viewing images, and may form a multi-functional personal electronic device with a mobile communication unit and an entertainment unit.

### BRIEF DESCRIPTION OF THE DRAWINGS

The present invention will become more fully understood from the detailed description given herein below for illustration only, and thus are not limitative of the present invention, and wherein:
FIG. 1 is a schematic three-dimensional structural view of an embodiment of the present invention; and
FIG. 2 is a schematic internal structural view of the present invention.

### DETAILED DESCRIPTION OF THE INVENTION

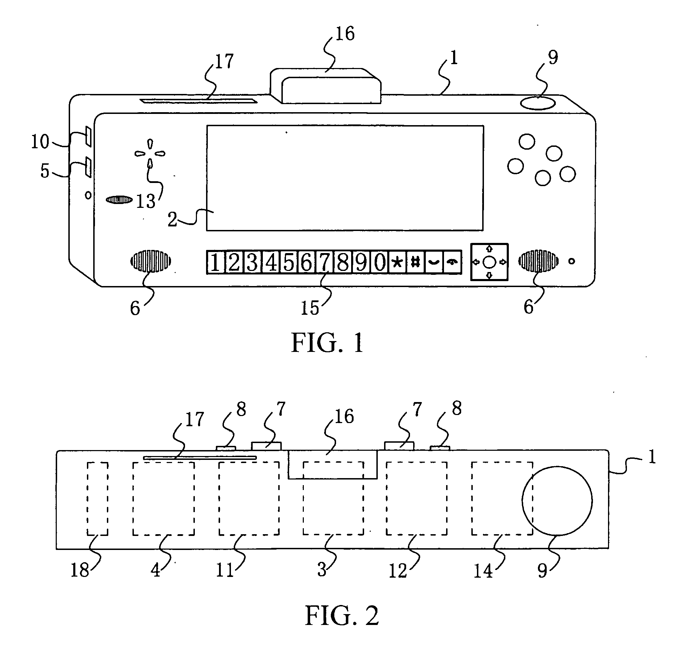

Referring to FIGs. 1 and 2, a portable personal integrative stereoscopic video multimedia device of the present invention includes a body 1. A naked eye stereoscopic image LCD 2 is disposed on the body 1, a control device 3 and a battery power 4 are disposed in the body 1, and a signal input interface 5 and loudspeakers 6 are disposed on the body 1. The naked eye stereoscopic image LCD 2, the battery power 4, the signal input interface 5, and the loudspeakers 6 are respectively connected to a control device 3 circuit. Two digital camera modules 7 and sound pickups 8 with the same performance are further disposed on the body 1, and a distance between the two digital camera modules 7 is adapted to a distance between pupils of human eyes, such that the shot scene is identical with the scene viewed by the human eyes. A shooting control button 9 and a signal output interface 10 are disposed on the body 1, and a built-in memory 11 is disposed in the body 1. The two digital camera modules 7, the signal output interface 10, and the built-in memory 11 are respectively connected to the control device 3 circuit to realize real-time playback or storage. A stereoscopic mobile TV signal receiving unit 18 capable of synchronously receiving audio signals and two sets of video signals is disposed in the body 1. The stereoscopic mobile TV signal receiving unit 18 may use two sets of mobile TV receiving units compatible with a DMB-TH broadcasting system, which respectively receive mobile TV signals having a viewing angle difference identical with that of the two eyes. The signal receiving unit 18 is connected to the control device 3 circuit. The control device 3 processes and delivers the audio signals to the loudspeakers 6, and processes and displays the two sets of video signals on the LCD 2, such that it is convenient for users to receive the stereoscopic TV broadcasting signals at any time, or store the stereoscopic TV broadcasting signals in the built-in memory 11 in the body 1. The signal input interface 5 and the signal output interface 10 may use various video and audio analog or digital input and output interfaces of the prior art, for example, VGB, coaxial, and optical fiber input and output interfaces.. A game unit 12 with wireless data transmission is disposed in the body 1 and is connected to the control device 3 circuit, and game operation buttons 13 are disposed on the body 1. The wireless data transmission may adopt infrared transmission and Bluetooth transmission techniques in the prior art. A wireless mobile communication unit 14 with a radio receiving function is disposed in the body 1, communication keys 15 are disposed on the body 1, and the communication unit 14 is connected to the control device 3 circuit. A flash unit or an illuminating light 16 is disposed on a lateral side of the body 1 having the two digital camera modules 7. A memory expansion slot 17 is disposed on the body 1, such that an external memory may be inserted into the memory expansion slot 17 conveniently to improve the convenience in use.

In actual applications, the present invention may be not only used as a stereoscopic image player, a stereoscopic image shooting device, a stereoscopic TV broadcasting receiver, a stereoscopic image shooting monitor, but also as a stereoscopic game console, a mobile communication terminal, an Internet stereoscopic image display, a sound recorder, and a micro speaker. Thus, the present invention provides a new portable personal entertainment and business electronic device for consumers.

## Claims

1. A portable personal integrative stereoscopic video multimedia device, comprising a body (1), wherein a naked eye stereoscopic image liquid crystal display (LCD) (2) is disposed on the body (1), a control device (3) and a battery power (4) are disposed in the body (1), and a signal input interface (5) and loudspeakers (6) are disposed on the body (1); the naked eye stereoscopic image LCD (2), the battery power (4), the signal input interface (5), and the loudspeakers (6) are respectively connected to a control device (3) circuit.

2. The portable personal integrative stereoscopic video multimedia device according to claim 1, wherein two digital camera modules (7) and sound pickups (8) are disposed on the body (1), a distance between the two digital camera modules (7) is adapted to a distance between pupils of human eyes; a shooting control button (9) and a signal output interface (10) are disposed on the body (1), and a built-in memory (11) is disposed in the body (1); the two digital camera modules (7), the signal output interface (10), and the built-in memory (11) are respectively connected to the control device (3) circuit.

3. The portable personal integrative stereoscopic video multimedia device according to claim 1, wherein a stereoscopic mobile TV signal receiving unit (18) capable of synchronously receiving audio signals and two sets of video signals is disposed in the body (1), the signal receiving unit (18) is connected to the control device (3) circuit; and the control device (3) processes and delivers the audio signals to the loudspeakers (6), and processes and displays the two sets of video signals on the LCD (2).

4. The portable personal integrative stereoscopic video multimedia device according to claim 1, 2, or 3, wherein a game unit (12) with wireless data transmission is disposed in the body (1), the game unit (12) is connected to the control device (3) circuit, and game operation buttons (13) are disposed on the body (1).

5. The portable personal integrative stereoscopic video multimedia device according to claim 1, 2, or 3, wherein a wireless mobile communication unit (14) with a radio receiving function is disposed in the body (1), communication keys (15) are disposed on the body (1), and the communication unit (14) is connected to the control device (3) circuit.

6. The portable personal integrative stereoscopic video multimedia device according to claim 4, wherein a wireless mobile communication unit (14) with a radio receiving function is disposed in the body (1), communication keys (15) are disposed on the body (1), and the communication unit (14) is connected to the control device (3) circuit.

7. The portable personal integrative stereoscopic video multimedia device according to claim 2, 3, or 6, wherein a flash unit or an illuminating light (16) is disposed on a lateral side of the body (1) having the two digital camera modules (7).

8. The portable personal integrative stereoscopic video multimedia device according to claim 2, 3, or 6, wherein a memory expansion slot (17) is disposed on the body (1).

9. The portable personal integrative stereoscopic video multimedia device according to claim 7, wherein a memory expansion slot (17) is disposed on the body (1).
